# EUROPÄISCHE PATENTSCHRIFT

(11) **EP 4 056 945 B1**
(45) Veröffentlichungstag und Bekanntmachung des Hinweises auf die Patenterteilung: **25.12.2024**
(21) Anmeldenummer: 22164270.5
(22) Anmeldetag: 08.10.2019
(51) Int. Cl.: G01B 5/008, G01B 21/04, G05B 19/401

(54) **VALIDIEREN VON PRÜFPLÄNEN ZUR OBJEKTVERMESSUNG MIT EINEM KOORDINATENMESSGERÄT**
VALIDATION OF INSPECTION PLANS FOR OBJECT MEASUREMENT USING A COORDINATE MEASURING DEVICE
VALIDATION DES PROTOCOLES D'ESSAI DESTINÉE À LA MESURE D'OBJET À L'AIDE D'UN APPAREIL DE MESURE DE COORDONNÉES

(43) Veröffentlichungstag der Anmeldung: 14.09.2022
(62) Teilanmeldung aus: 19201829.9
(73) Patentinhaber: Carl Zeiss Industrielle Messtechnik GmbH, 73447 Oberkochen (DE)
(72) Erfinder: Eckardt, Nils, 73655 Plüderhausen (DE); Rieger, Stephan, 73447 Oberkochen (DE)
(74) Vertreter: Ramrath, Lukas

(56) Entgegenhaltungen:
- WO-A1-2017/121468
- US-A1- 2014 157 861
- YANG HU ET AL: "Design, Implementation, and Testing of Advanced Virtual Coordinate-Measuring Machines", IEEE TRANSACTIONS ON INSTRUMENTATION AND MEASUREMENT, IEEE SERVICE CENTER, PISCATAWAY, NJ, US, vol. 61, no. 5, 6 April 2012 (2012-04-06), pages 1368 - 1376, XP011440639, ISSN: 0018-9456, DOI: 10.1109/TIM.2011.2175828
- GIOVANNI MORONI ET AL: "Optimal inspection strategy planning for geometric tolerance verification", PRECISION ENGINEERING, vol. 38, no. 1, 1 January 2014 (2014-01-01), AMSTERDAM, NL, pages 71 - 81, XP055683426, ISSN: 0141-6359, DOI: 10.1016/j.precisioneng.2013.07.006
- GIOVANNI MORONI ET AL: "Coordinate Measuring Machine Measurement Planning", 1 January 2011, GEOMETRIC TOLERANCES, SPRINGER, PAGE(S) 111 - 158, ISBN: 978-1-84996-310-7, XP009177945

## Beschreibung

Die Erfindung betrifft ein Verfahren und eine Computereinrichtung zum Validieren von Prüfplänen zur Objektvermessung mit oder, anders ausgedrückt, durch ein Koordinatenmessgerät. Die Objektvermessung kann eine bevorzugt dreidimensionale Koordinatenermittlung umfassen, insbesondere von Oberflächenkoordinaten des Objekts. Anders ausgedrückt kann der Prüfplan für ein Koordinatenmessgerät vorgesehen und/oder von einem Koordinatenmessgerät ausführbar sein.

Im Folgenden werden Hintergründe zu dem technischen Gebiet der Objektvermessung mittels Prüfplänen erläutert. Sämtliche Merkmale, Varianten und Ausführungen können dabei auch bei der hierin offenbarten Erfindung vorgesehen sein beziehungsweise auf diese zutreffen.

Es ist bekannt, für die Prüfung bzw. Vermessung von Werkstücken sogenannte Prüfpläne zu erzeugen. Ein solcher Prüfplan definiert Parameter eines Prüfprozesses, durch den die Qualität eines Werkstücks bzw. zu vermessenden Objekts festgestellt werden kann. Ein derartiger Prüfplan kann beispielsweise anhand bestimmter allgemeiner Normen oder Hersteller- oder Kundenvorgaben festgelegt werden.

Der Prüfplan kann durch ein Prüf- oder Messgerät ausgeführt werden, beispielsweise durch ein Koordinatenmessgerät (KMG), das im Rahmen der Prüfung vorzugsweise dreidimensionale Koordinaten eines Objekts erfasst, insbesondere Oberflächenkoordinaten. Der Prüfplan kann digitale Daten, digitale Parameter, Programmanweisungen und/oder einen Algorithmus umfassen, der/die ein Prüfgerät (z.B. ein KMG) veranlasst/veranlassen, den Prüfprozess gemäß dem Prüfplan (z.B. gemäß den darin definierten Zusammenhängen und/oder Parametern) auszuführen.

Allgemein kann der Prüfplan eine Datei oder ein Computerprogramm sein, die/das von einer Steuereinrichtung lesbar und/oder ausführbar ist, wobei die Steuereinrichtung vorzugsweise von einem Prüfgerät umfasst ist (zum Beispiel einem KMG), das den Prüfplan umsetzen soll.

Beispielsweise können durch den Prüfplan (insbesondere digitale und/oder programmierte) Arbeitsanweisungen zur Durchführung einer gewünschten Objekt-Prüfung festgelegt sein, z.B. in Form von Befehlen. Zusätzlich oder alternativ kann der Prüfplan die zur Durchführung und Datenerzeugung einzustellenden Prüfparameter, z.B. Beleuchtungsparameter oder Antastkräfte, definieren und/oder die zur Durchführung zu verwendenden Prüfkomponenten, z.B. Sensoren. Auch kann ein Prüfplan Prüfparameter enthalten, die zur Laufzeit der Prüfung eingestellt oder verändert werden können, z.B. um zeitlich nachfolgende Prüf(teil)prozesse anzupassen.

Ferner zusätzlich oder alternativ kann eine zur Durchführung der Prüfung abzufahrende Prüftrajektorie, z.B. eines Sensors, durch den Prüfplan festgelegt sein. Auch kann die Prüfergebnisdokumentation durch den Prüfplan festgelegt sein.

Ebenfalls kann der Prüfplan Informationen zu einer Lage und Gestalt des zu prüfenden Werkstücks, z.B. in einem Prüf-Koordinatensystem, und/oder Informationen zu SollWerten von Prüfmerkmalen enthalten. Informationen zur Gestalt können z.B. in Form eines CAD-Modells im Prüfplan enthalten sein. Durch ein solches CAD-Modell können auch die erläuterten Soll-Werte festgelegt sein. Zusätzlich oder alternativ kann der Prüfplan Toleranzangaben für ein Prüfmerkmal umfassen.

Während der Durchführung des Prüfplans erzeugte Ist-Informationen, z.B. Messpunkte, Koordinatenwerte, Bilder oder Messwerte, können ebenfalls im Prüfplan abgespeichert werden.

Basierend auf dem Prüfplan können durch eine Messeinrichtung oder, anders ausgedrückt, ein Messgerät zu erfassende Messpunkte festgelegt und/oder ausgelesen werden, die zur Auswertung der im Prüfplan definierten Prüfmerkmale notwendig sind. Anschließend kann ein Messablauf definiert werden, um hierdurch Messpunkte zum Beispiel auf der Oberfläche des zu vermessenden Werkstücks zu erfassen. In einem Prüfschritt bzw. Messschritt wird der so festgelegte Messablauf durch das Messgerät (zum Beispiel in Form eines KMG) abgearbeitet, wodurch dann die benötigten Messpunkte (und insbesondere deren räumliche Koordinaten) gemäß dem durch den Prüfplan festgelegten Messablauf erfasst und gespeichert werden. Hiernach werden die einzelnen Prüfmerkmale des Prüfplans basierend auf den aufgenommenen Messpunkten und/oder den erhaltenen Koordinaten ausgewertet und werden hierdurch die zur Erstellung eines Messprotokolls erforderlichen Daten gewonnen.

Allgemein ausgedrückt kann ein Prüfplan somit Vorschriften (zum Beispiel in Form zu erfassender Messpunkte) enthalten, welche einen gewünschten Messablauf mittelbar oder unmittelbar beschreiben.

Insbesondere kann der Prüfplan die zu prüfenden Prüfmerkmale eines zu vermessenden Werkstücks und/oder Informationen zu diesen Prüfmerkmalen enthalten bzw. definieren. Prüfmerkmale können Qualitätskriterien, insbesondere dimensioneller Art sein, deren Einhaltung im Prüfprozess überprüft werden soll. Anders ausgedrückt kann ein Prüfmerkmal eine dimensionale Eigenschaft wenigstens eines definierten geometrischen Elements (Messelement) an einem Messobjekt repräsentieren. Beispiele für Prüfmerkmale sind der Abstand der Mittelpunkte zweier Bohrungen, die Abweichungen von Messpunkten auf einer Freiformfläche gegenüber einer Sollform, die Lage des Mittelpunktes einer Bohrung, der Durchmesser einer Bohrung, die Position eines Messelements in einem Referenzkoordinatensystem etc.

Beim Erstellen von Prüfplänen werden in der Regel zunächst die zu überprüfenden Prüfmerkmale identifiziert. Diesen Prüfmerkmalen sind jeweils Messelemente zugeordnet, die zum Überprüfen der Prüfmerkmale vermessen werden müssen. Genauer gesagt ist es in der Regel notwendig, zum Quantifizieren eines Prüfmerkmals, das sich auf ein bestimmtes Messelement bezieht oder, anders ausgedrückt, in Abhängigkeit von diesem definiert ist, Messpunkte dieses Messelements aufzunehmen. Auf dem vorliegend betrachteten Gebiet der Koordinatenmesstechnik wird für einen solchen Messpunkt typischerweise ein Koordinatenmesswert ermittelt. Hieraus können dann räumliche Freiheitsgrade (insbesondere die vollständige räumliche Position und Orientierung, also die Lage) und/oder können Abmessungen des Messelements berechnet werden.

Von einer Abhängigkeit zwischen Prüfmerkmal und Messelement wird hierin allgemein dann gesprochen, wenn das Messelement zum Überprüfen (insbesondere Quantifizieren) des Prüfmerkmals angetastet und/oder vermessen werden muss. Ein solches Messelement stellt ein Referenzelement für das Prüfmerkmal dar, da es eine zu vermessende Referenz zum Quantifizieren des Prüfmerkmals bildet.

Der Zusammenhang zwischen Prüfmerkmalen und Referenzelementen sowie deren etwaige Auswirkungen auf die Genauigkeit einer Objektvermessung ist insbesondere für wenig erfahrene Bediener nur schwer nachvollziehbar. Es hat sich gezeigt, dass es im Rahmen einer Objektvermessung deshalb oftmals zu einer unnötigen nicht-in-Ordnung-Bewertung von Prüfmerkmalen kommt, obwohl dies nicht den Verhältnissen am realen Objekt bzw. Bauteil entspricht.

Eine Lösung zur Planung von Prüfstrategien mittels virtueller Koordinatenmessgeräte ist offenbart in:
Yang Hu et al.: "Design, Implementation, and Testing of Advanced Virtual Coordinate-Measuring Machines", IEEE Transactions on Instrumentation and Measurement, IEEEService Center, Piscataway, NJ, US, Bd. 61, Nr. 5, 1. Mai 2012 (2012-05-01), Seiten 1368-1376, XP011440639, ISSN: 0018-9456, DOI: 10.1109/TIM.2011.2175828.

Die US 2004 / 157861 A1 offenbart eine Lösung zur Korrektur von Temperaturabweichung beim seriellen Vermessen gleichartiger Werkstücke.

Weiterer technologischer Hintergrund findet sich in der WO 2017 / 121468 A1 sowie in den beiden folgenden Veröffentlichungen:
Giovanni Moroni et al.: "Optimal inspection strategy planning for geometric tolerance verification", Precision Engineering, Bd. 38, Nr. 1, 1. Januar 2014 (2014-01-01), Seiten 71-81, XP055683426, Amsterdam, NL, ISSN: 0141-6359, DOI: 10.1016(j.precisioneng.2013.07.006;

Giovanni Moroni et al.: "Coordinate Measuring Machine Measurement Planning", 1. Januar 2011 (2011-01-01), Geometric Tolerances, Springer, Page(s) 111-158, XP099177945, ISBG: 978-1-84996-310-7.

Eine Aufgabe der vorliegenden Erfindung ist es, das Vermessen von Werkstücken mit Koordinatenmessgerät zu verbessern, insbesondere dahingehend, dass Werkstücke mit einer geringeren Wahrscheinlichkeit unzutreffenderweise als nicht in Ordnung bewertet werden.

Diese Aufgabe wird durch ein Verfahren und eine Computereinrichtung gemäß den beigefügten unabhängigen Ansprüchen gelöst. Vorteilhafte Weiterbildungen sind in den abhängigen Ansprüchen angegeben.

Erneut ist zu betonen, dass die in der einleitenden Beschreibung erwähnten Merkmale, Ausführungen und Definitionen einzeln oder in beliebiger Kombination auch bei der vorliegend offenbarten Lösung vorgesehen sein können. Dies betrifft insbesondere sämtliche Ausführungen von und Definitionen zu Prüfplänen, Prüfmerkmalen, Messelementen und Referenzelementen, wobei der Schutzumfang der beschriebenen Erfindung durch die beigefügten Ansprüche bestimmt wird.

Erfindungsgemäß wurde erkannt, dass eine häufige Ursache für nicht gerechtfertigte nicht-in-Ordnung-Bewertungen von Prüfmerkmalen ist, dass das Vermessen dieser Prüfmerkmale nur mit einer unzureichenden Genauigkeit erfolgt. Insbesondere wurde erkannt, dass oftmals bereits das Vermessen der Referenzelemente nur mit einer begrenzten und teilweise unzureichenden Genauigkeit möglich ist. Sollen basierend auf diesen Vermessungen der Referenzelemente dann die Prüfmerkmale zum Beispiel rechnerisch ermittelt (d. h. quantifiziert) werden, kann es zu nicht-in-Ordnung-Bewertungen kommen, obwohl sich dies am realen Bauteil nicht widerspiegelt.

Genauer gesagt ist es für einen Bediener bisher nur bedingt möglich, eine Fehlerursache für ein negative Bewertungen von Prüfmerkmalen zuverlässig zu ermitteln. Selbstverständlich kann das Objekt als solches und genauer gesagt dessen mangelnde Qualität eine Ursache für Messergebnisse außerhalb einer zulässigen Toleranz sein. Andererseits kann aber auch die Definition des Prüfplans sowie der hiervon umfassten Merkmale und Messelemente zumindest teilweise ursächlich für eine solche Bewertung und/oder Messergebnisse sein. Beispielsweise kann ein Prüfmerkmal überwiegend deshalb als nicht in Ordnung bewertet werden, da die zugrundeliegenden Messelemente, die diesem Merkmal als Referenzelemente zugeordnet sind bzw. als Referenzelemente für dieses Prüfmerkmal dienen und hierfür vermessen werden, nur mit einer unzureichenden Genauigkeit vermessbar sind.

Das Identifizieren einer solchen Fehlerursache wird aber insbesondere dann komplex, wenn Vermessungsergebnisse der Referenzelemente zumindest teilweise selbst basierend auf Vermessungen von anderen Messelementen ermittelt wurden, d. h. das Prüfmerkmal von einer Mehrzahl von aufeinander aufbauenden Messelementen abhängig ist.

Für einen Bediener kann es viel Erfahrung und Zeit erfordern, um herauszufinden, ob ein als nicht in Ordnung bewertetes Prüfmerkmal tatsächlich überwiegend auf das Bauteil oder aber überwiegend auf die Definition des Prüfplans sowie die dort festgelegten und gegebenenfalls nur ungenau vermessbaren Referenzelemente zurückzuführen ist. Bleibt eine solche Prüfung aus, kann es zu hohen Ausschussraten kommen, da Objekte in unnötig hohem Ausmaß als nicht in Ordnung bewertet werden.

Es wird daher vorgeschlagen, für Referenzelemente, von denen ein Prüfmerkmal abhängig ist, Genauigkeitsgrößen zu betrachten. Diese können allgemein eine Genauigkeit angeben, mit der ein solches Referenzelement vermessbar ist oder, mit anderen Worten, eine Genauigkeit, mit der ein Vermessungsergebnis des Referenzelements ermittelbar ist.

Hieraus kann z. B. ermittelt werden, ob das Prüfmerkmal von nur ungenau vermessbaren Referenzelementen abhängt. Eine solche Ermittlung kann automatisch erfolgen, zum Beispiel anhand eines automatisch ermittelten (insbesondere berechneten) Fehlereinflusses der Referenzelemente auf die Quantifizierung des Prüfmerkmals. Der Fehlereinfluss kann eine insbesondere verfälschende Auswirkung oder einen verfälschenden Effekt angeben, den das Referenzelement auf die Quantifizierung des Prüfmerkmals besitzt.

Auf diese Weise kann beispielsweise bestimmt werden, dass die Ursache für nicht akzeptable Prüfmerkmalswerte möglicherweise die nur ungenau vermessbaren Messelemente sind und nicht zwingend das Objekt als solches ist.

Ein Bediener kann dann geeignete Gegenmaßnahmen ergreifen und/oder entsprechende Gegenmaßnahmen können automatisch ermittelt und/oder automatisch vorgeschlagen und/oder gegebenenfalls auch automatisch umgesetzt werden. Die Gegenmaßnahmen können ein Anpassen der Vermessung der Referenzelemente umfassen, sodass die Genauigkeit erhöht wird, oder eine Neudefinition des Prüfmerkmals und/oder Neuauswahl der vermessenen Referenzelemente, zum Beispiel durch Anpassen der Abhängigkeiten.

Es werden also Möglichkeiten geschaffen, (beispielsweise durch Ermitteln des Fehlereinflusses) Beeinträchtigungen der Quantifizierung des Prüfmerkmals durch nur ungenau vermessbare Referenzelemente zu erkennen und/oder einem Bediener anzuzeigen. Der Bediener wird hierdurch von eigenen Fehlerermittlungen entlastet, was auch die Anforderungen an Qualifizierung und Erfahrung des Bedieners reduziert. Weiter wird das Einrichten des Prüfplans beschleunigt, da nicht iterativ etwaige Fehlereinflüsse erst ermittelt werden müssen, und die Qualität eines erzeugten Prüfplans sowie der damit ermittelbaren Prüfmerkmalswerte wird erhöht. In der Folge wird auch die Gefahr reduziert, dass Objekte, die Prüfmerkmale erfüllen, fälschlicherweise als nicht in Ordnung bewertet werden, da die Prüfmerkmalsermittlung aufgrund einer Abhängigkeit von nur ungenau messbaren Referenzelementen fehleranfällig ist und einer hohen Messunsicherheit unterliegt.

Im Detail wird ein Verfahren zum Validieren eines Prüfplans für die Objektvermessung mit einem Koordinatenmessgerät vorgeschlagen, wobei der Prüfplan wenigstens ein Prüfmerkmal enthält, das im Rahmen der Objektvermessung quantifiziert werden soll, wobei die Quantifizierung des Prüfmerkmals auf Basis eines Vermessungsergebnisses wenigstens eines Referenzelements des Objekts erfolgen soll; wobei das Verfahren umfasst:
- Erhalten von wenigstens einer Genauigkeitsgröße, die eine Genauigkeit des Vermessungsergebnisses des Referenzelements angibt;
- Ermitteln eines Fehlereinflusses des Referenzelements auf die Quantifizierung des Prüfmerkmals basierend auf der Genauigkeitsgröße.

Bei dem Koordinatenmessgerät kann es sich um ein Messgerät zur Aufnahme dreidimensionaler (d. h. räumlicher) Messpunktkoordinaten handeln, wobei die Messpunkte bevorzugt auf einer Bauteiloberfläche und/oder in einem Bauteilinneren (zum Beispiel bei einem Computer-Tomographen-Koordinatenmessgerät) liegen können. Das Koordinatenmessgerät kann gemäß jeglicher gängigen Bauart ausgebildet sein, insbesondere als ein Gerät umfassend bevorzugt eine Mehrzahl von ansteuerbaren Maschinenachsen, um einen Messsensor relativ zu dem Objekt zu positionieren. Beispielsweise können wenigstens zwei Linearachsen vorgesehen sein, die bevorzugt orthogonal zueinander stehen. Insbesondere kann das Koordinatenmessgerät in Portalbauweise oder Brückenbauweise ausgebildet sein.

Das Koordinatenmessgerät kann das Objekt taktil (beispielsweise durch Antasten mit einem Messtaster) oder berührungslose erfassen (zum Beispiel mittels eines optischen Sensors). Das Objekt kann ein industriell hergestelltes Bauteil sein. Die Vermessung kann im Rahmen einer Qualitätsüberprüfung von zum Beispiel einer seriellen Objekt- oder Bauteilfertigung durchgeführt werden.

Das Vermessungsergebnis kann wenigstens einen Messwert enthalten oder ein solcher Messwert sein. Das Prüfmerkmal kann auf Basis von und insbesondere durch Verrechnen des Vermessungsergebnisses und/oder Messwerts quantifiziert werden. Je nach Prüfmerkmal können hierfür vorbestimmte Rechenregeln angewandt werden. Beispielsweise können als Vermessungsergebnis Mittelpunktkoordinaten von zwei Kreisen oder Bohrungen bestimmt werden und kann daraus als Prüfmerkmal der Abstand dieser Mittelpunkte durch eine einfache Differenzbildung bestimmt werden.

Als Bestandteil der hierin vorgestellten Erfindung kann auch vorgesehen sein, den Prüfplan tatsächlich auszuführen, Vermessungsergebnisse eines Referenzelements zu ermitteln und das Prüfmerkmal zu quantifizieren. Dieses aber nicht zwingend. Die Erfindung ist auf die Prüfplanvalidierung im Sinne einer Vorbereitung einer erst anschließend durchgeführten Umsetzung oder Ausführung des Prüfplans gerichtet.

Die Genauigkeitsgröße, die allgemein wenigstens einen quantifizierten Wert definieren oder ein solcher Wert sein kann, kann auch als Messunsicherheit bezeichnet werden und/oder eine solche Messunsicherheit angeben. Beispiel konkreter Genauigkeitsgrößen werden nachstehend noch erläutert.

Der Fehlereinfluss kann wenigstens einen quantifizierten Wert angeben. Es kann sich um einen Skalenwert und/oder einen eine Reihenfolge angeben Wert handeln, zum Beispiel um anzugeben, welches aus einer Mehrzahl etwaiger Referenzelemente den größten Fehlereinfluss auf die Prüfmerkmalsquantifizierung besitzt. Hierfür können zum Beispiel die Genauigkeitsgröße der Referenzelemente miteinander verglichen und/oder kann darauf basierend eine Reihenfolge ermittelt werden. Vorzugsweise wird der Fehlereinfluss aber basierend auf einer nachstehend erläuterten ausgenutzten und/oder beanspruchten Toleranzbreite des Prüfmerkmals ermittelt, die auf das betrachtete Referenzelement zurückzuführen ist.

Wie erwähnt, können Referenzelemente, deren Vermessungsergebnisse zur Quantifizierung eines Prüfmerkmals verwendet werden, eine Abhängigkeitsbeziehung zu dem Prüfmerkmal aufweisen. Anders ausgedrückt kann das Prüfmerkmal in Abhängigkeit von diesen Referenzelementen definiert und/oder ermittelbar sein, sodass davon gesprochen werden kann, dass das Prüfmerkmal abhängig von diesen Referenzelementen ist. Die Referenzelemente selbst können aber ebenfalls abhängig von weiteren Messelementen sein, d. h. deren Vermessungsergebnis kann zumindest teilweise auf Basis eines Vermessungsergebnisses von einem weiteren Messelement ermittelt werden. Derartige weitere Messelemente können somit zumindest mittelbar als Referenz für das Prüfmerkmal dienen und werden daher hierin ebenfalls als Referenzelemente bezeichnet.

Das Verfahren ist computerimplementiert. Prinzipiell können sämtliche hierin geschilderten Verfahrensschritte und Verfahrensmaßnahmen automatisiert und/oder ohne, dass gezielte Benutzereingaben hierfür erforderlich sind ausführbar sein. Beispielsweise kann ein Verfahren gemäß jeglicher hierin geschilderter Variante oder können sämtliche hiervon umfassten Maßnahmen mit einer Computereinrichtung der hierin offenbarten Art ausgeführt werden.

Ein Aspekt der Erfindung von Verfahren und Computereinrichtung sieht vor, zu ermitteln, ob der Fehlereinfluss ein Fehlerkriterium erfüllt, und wenn dies der Fall ist:
- Klassifizieren des Referenzelements als ein kritisches Referenzelement.

Das Fehlerkriterium kann zum Beispiel das Überschreiten eines vorbestimmten und maximal zulässigen Schwellenwerts des Fehlereinflusses sein, der einen quantifizierten Wert angeben kann. Das Klassifizieren kann umfassen, dass das Referenzelement mit einer entsprechenden datenbasierten und/oder digitale Information versehen wird oder diesem eine solche Information zugeordnet wird. Die Klassifizierung kann einem Benutzer angezeigt werden, zum Beispiel auf einer Anzeigeeinrichtung einer hierin offenbarten Computereinrichtung. Hierfür kann ein kritisches Referenzelement zum Beispiel in einem grafisch dargestellten Prüfplan optisch hervorgehoben werden. Zusätzlich oder alternativ kann das Referenzelement mit einer entsprechenden Bezeichnung (zum Beispiel "kritisch") versehen sein und/oder kann ein Fehlereinfluss (zum Beispiel in Form eines entsprechenden Fehlereinfluss-Wertes) angezeigt werden.

Eine Weiterbildung von Verfahren und Computereinrichtung sieht vor, dass das Vermessungsergebnis des Referenzelements basierend auf dem Vermessungsergebnis von wenigstens einem weiteren Referenzelement zu ermitteln ist oder, mit anderen Worten, ermittelt werden soll oder ermittelt wird. Es kann also die vorstehend geschilderte Abhängigkeit des Referenzelements von wenigstens einem weiteren Messelement vorliegen. Erneut kann die Ermittlung des Vermessungsergebnisses optional von der hierin geschilderten Lösung umfasst sein, erfolgt jedoch bevorzugt erst zu einem späteren Zeitpunkt nach Validierung des Prüfplans. Auch für dieses weitere Referenzelement wird dann bevorzugt ein (weiterer) Fehlereinfluss auf die erreichbare Genauigkeit der Quantifizierung ermittelt. Dieses weitere Referenzelement kann entsprechend mittelbar die Genauigkeit der Prüfmerkmalsquantifizierung beeinflussen.

Somit kann im Sinne eines Abhängigkeitsbaums oder einer mehrstufig aufgeschlüsselten Abhängigkeit berücksichtigt werden, von welchen Referenzelementen das Prüfmerkmal zumindest mittelbar abhängig ist und können (Fehler-) Einflüsse auf die Quantifizierung des Prüfmerkmals insbesondere auch von Referenzelementen ermittelt werden, zu denen nur eine mittelbare Abhängigkeit besteht. Dies ermöglicht eine noch genauere Analyse einer etwaigen Fehlerursache, da mögliche Fehlereinflüsse auf die Quantifizierung des Prüfmerkmals noch umfassender und über mehrere Abhängigkeitsstufen hinweg berücksichtigt werden können.

Allgemein kann vorgesehen sein, dass das Referenzelement ein geometrisches Element des Objekts ist. Es kann allgemein auch als Formelement oder Messelement bezeichnet werden. Insbesondere kann es sich um ein reales, physisches geometrisches Element handeln, das im Rahmen einer Objektvermessung zum Beispiel von dem Koordinatenmessgerät antastbar ist. Es kann sich aber auch um ein virtuelles und/oder rechnerisch ermitteltes geometrisches Element handeln, das nicht real antastbar ist, sondern zum Beispiel im Sinne eines Hilfselements basierend auf Messwerten für andere Elemente bestimmt wird. Ein Beispiel ist ein Schnittpunkt von Bohrungsachsen, der außerhalb eines Objektvolumens liegt.

Gemäß einer Weiterbildung des Verfahrens und der Computereinrichtung wird das Vermessungsergebnis des Referenzelements anhand von wenigstens einem Koordinatenwert (der auch als Ist-Wert bezeichnet werden kann) dieses Referenzelements ermittelt. Insbesondere können die Koordinatenwerte auf Basis einer realen oder simulierten Objektvermessung ermittelt werden. Simulierte Objektvermessungen sind bekannt. Reale Bauteiltoleranzen und Messunsicherheiten können dabei durch Zufallsvariablen berücksichtigt werden. Insbesondere ist es im Rahmen von Simulationen bekannt, Koordinatenwerte basierend auf Verteilungen zu ermitteln, die zum Beispiel aus einer Monte-Carlo-Simulation, Zufallsverteilungen oder mittels der Box-Muller-Methode ermittelt wurden. Dabei können auch jeweils Eigenschaften des konkret betrachteten Koordinatenmessgeräts und insbesondere dessen Genauigkeitsklasse berücksichtigt werden.

Allgemein kann ferner vorgesehen sein, dass das Vermessungsergebnis des Referenzelements wenigstens einen räumlichen Freiheitsgrad und/oder wenigstens eine Abmessung des Referenzelements angibt. Ein räumlicher Freiheitsgrad kann jeglicher Freiheitsgrad sein, mit dem eine Lage (d. h. Position und Orientierung) des Referenzelements zum Beispiel in einem Referenzkoordinatensystem beschreibbar ist. In an sich bekannter Weise können in einem karthesischen Koordinatensystem definierte drei translatorische und drei rotatorische Freiheitsgrade vorgesehen sein. Die Abmessung kann eine Erstreckung entlang wenigstens einer Achse eines Referenzkoordinatensystems sein.

Auf diese Weise kann das Vermessungsergebnis beispielsweise dazu verwendet werden, um in Kenntnis der (bevorzugt vollständigen) räumlichen Lage und/oder der Abmessung einen Abstand oder eine andere Eigenschaft einer Relativanordnung zu dem Referenzelement zu bestimmen, wobei die Abmessung bzw. die Eigenschaft das Prüfmerkmal sein kann.

Bei einer weiteren Ausführungsform des Verfahrens und der Computereinrichtung wird die Genauigkeitsgröße auf Basis von wenigstens einem der folgenden ermittelt, wobei nachstehende Koordinaten insbesondere mittels obiger Simulationen während einer rein rechnerbasierten Prüfplanvalidierung oder beim realen Vermessen z.B. eines Test-Objekts gewonnen werden können:
- Einer statistischen Kenngröße einer Verteilung von Koordinatenwerten, die zum Ermitteln des Vermessungsergebnisses des Referenzelements bestimmt wurden. Beispielsweise kann eine Spannweite der Koordinatenwerte und/oder eine Verteilungsgröße, wie eine Standardabweichung, betrachtet werden. Zusätzlich oder alternativ kann die statistische Kenngröße auf Basis eines Ausgleichsverfahren der nachstehend erläuterten Art ermittelt werden. Je größer eine Streuung, Abweichung oder Spannweite der Koordinatenwerte, desto geringer kann die Genauigkeitsgröße gewählt werden.

Zum Beispiel kann im Rahmen des Ausgleichsverfahrens ein geometrisches Element berechnet werden, das im Sinne einer Einpassung in eine Mehrzahl von Koordinatenwerten eingepasst wird (zum Beispiel ein Kreis, der in eine Mehrzahl von an einem Bohrungsrand erfassten Koordinatenwerten eingepasst wird). Als eine statistische Kenngröße kann dann zum Beispiel eine durchschnittliche Abweichung der realen Koordinatenwerte von den berechneten Koordinaten des eingepassten geometrischen Elements ermittelt werden. Je größer die Abweichung, desto geringer kann die Genauigkeitsgröße gewählt werden.
- Einer Abweichung wenigstens eines Koordinatenwerts von einem aus einer Mehrzahl von Koordinatenwerten berechneten Vermessungsergebnis für das Referenzelement. Dies betrifft insbesondere denjenigen Fall, dass das Vermessungsergebnis mittels eines erläuterten Ausgleichsverfahrens bestimmt wird, zum Beispiel als ein berechnetes bzw. eingepasstes geometrisches Element. Je größer die Abweichung, desto geringer kann die Genauigkeitsgröße gewählt werden.
- Einem Ausgleichsverfahren, das zum Berechnen des Vermessungsergebnisses aus einer Mehrzahl von Koordinatenwerten durchgeführt wird. Das Ausgleichsverfahren kann ein geometrisches Element der erwähnten Art in eine Mehrzahl ermittelter Koordinatenwerte einpassen. Bei dem geometrischen Element kann es sich zum Beispiel um eine Gerade, einen Kreis oder eine Ebene handeln. Die Koordinatenwerte liegen als Ist-Werte typischerweise meist nicht auf oder innerhalb dieses geometrischen Elements, sondern weichen hiervon geringfügig ab. Je größer die (zum Beispiel durchschnittliche oder maximale) Abweichung, desto geringer kann die Genauigkeitsgröße gewählt werden.
- Einer Formabweichung des Referenzelements. Die Formabweichung kann in an sich bekannter Weise anhand von Koordinatenwerten des Referenzelements berechnet werden, z.B. als größte Abweichung der Koordinaten innerhalb eines eingepassten Geometrieelements und/oder als Differenz der maximalen und minimalen Koordinaten der Messpunkte eines eingepassten Geometrieelements. Auf diese Weise können auch Fehlereinflüsse wie z.B. eine allgemeine Messunsicherheit und/oder Oberflächenabweichungen des Bauteils an einer Messstelle zumindest indirekt mit berücksichtigt werden. Analog zu den vorstehenden Ausführungen zu Ausgleichsverfahren kann daher gelten: Je größer die Formabweichung, desto geringer kann die Genauigkeitsgröße gewählt werden.
- Einer inhärenten oder, anders ausgedrückt, systematischen Messunsicherheit des Koordinatenmessgeräts. Hierbei kann es sich um eine Messunsicherheit handeln, die zum Beispiel auf eine imperfekte Kinematik des Koordinatenmessgeräts zurückzuführen ist. Inhärente Messunsicherheiten können zum Beispiel beim Hersteller eines Koordinatenmessgeräts vor Auslieferung gemäß standardisiertem Verfahren ermittelt werden. Zusätzlich oder alternativ kann eine solche Ermittlung im Rahmen einer Maschinenannahmeprüfung stattfinden. Die inhärente Messunsicherheit kann eine Leistungsfähigkeit des Koordinatenmessgeräts hinsichtlich der erzielbaren Vermessungsgenauigkeit angeben. Je größer die inhärente Messunsicherheit, desto geringer kann die Genauigkeitsgröße gewählt werden.

Gemäß einer weiteren Ausführungsform des Verfahrens und der Computereinrichtung ist der Fehlereinfluss des Referenzelements auf Basis eines möglichen Wertespektrums des Vermessungsergebnisses dieses Referenzelements bestimmbar, wobei das Wertespektrum anhand der Genauigkeitsgröße bestimmt wird. Beispielsweise kann die Genauigkeitsgröße verwendet werden, um einen aus der Vermessung resultierenden erwarteten Variationsbereich (bzw. das erwartete Wertespektrum) des Vermessungsergebnisses festzulegen. Insbesondere können eine mögliche Obergrenze und eine Untergrenze des Wertespektrums ermittelt werden, wobei die Obergrenze und Untergrenze jeweils mögliche Extremwerte des Vermessungsergebnisses darstellen.

Das Wertespektrum kann verwendet werden, um in der nachstehenden erläuterten Weise daraus eine resultierende Variationsbreite der Quantifizierung des Prüfmerkmals zu bestimmen.

Genauer gesagt kann gemäß einer weiteren Variante des Verfahrens und der Computereinrichtung auf Basis des Wertespektrums des Referenzelements ein mögliches Quantifizierungs-Wertespektrum des Prüfmerkmals ermittelt und mit einer (vorbestimmten) zulässigen Toleranzbreite des Prüfmerkmals verglichen werden. Beispielsweise können etwaige Extremwerte eines Wertespektrums verwendet werden, um daraus resultierende (externe) Quantifizierungswerte des Prüfmerkmals zu ermitteln. Hieraus kann die zu erwartende Variationsbreite des Prüfmerkmals bestimmt werden, die sich aus dem möglichen Wertespektrum des Vermessungsergebnisses ergibt.

Es kann dann überprüft werden, inwieweit sich diese Variationsbreite und die zulässige Toleranzbreite überschneiden bzw. welchen Anteil diese Variationsbreite von der Toleranzbreite einnimmt. Zeichnet sich ab, dass ein Referenzelement derart ungenau vermessbar ist, dass auch die Quantifizierungswerte des Prüfmerkmals erhöhten Schwankungen unterliegen und zum Beispiel mehr als 10 %, mehr als 20 % oder mehr als 50 % der Toleranzbreite einnehmen, kann der Fehlereinfluss als kritisch bewertet werden. Dies ist insbesondere dann der Fall, wenn das Prüfmerkmal von mehr als einem Referenzelement abhängig ist, sodass ein einzelnes Referenzelement nur einen entsprechend geringen Anteil der Toleranzbreite beanspruchen sollte.

Zusammengefasst kann allgemein dann, wenn das Quantifizierungs-Wertespektrum einen zulässigen Anteil der Toleranzbreite des Prüfmerkmals überschreitet, das Fehlerkriterium erfüllt sein. Folglich kann das entsprechende Referenzelement dann als kritisch klassifiziert werden.

Gemäß eines Aspektes des erfindungsgemäßen Verfahrens und der Computereinrichtung wird ermittelt, ob der Fehlereinfluss ein Fehlerfreiheitskriterium (oder auch nicht-kritisch-Kriterium) erfüllt, und wenn dies der Fall ist:
- Klassifizieren des Referenzelements als ein unkritisches Referenzelement.

In analoger Weise wie zu kritischen Referenzelementen oben erläutert, können auch in diesem Fall sämtliche erwähnten Maßnahmen ergriffen werden, um einem Bediener die entsprechende Klassifikation zur Kenntnis zu bringen. Allgemein bietet diese Variante den Vorteil, dass einem Bediener vermittelt werden kann, welche Referenzelemente als Fehlerursachen ausscheiden und/oder nicht optimiert oder anders vermessen werden müssen.

In diesem Zusammenhang kann ferner vorgesehen sein, dass wenigstens ein Vermessungsparameter, auf dessen Basis ein Vermessungsergebnis des als unkritisch bewerteten Referenzelements ermittelbar ist und der bevorzugt im Prüfplan definiert ist, zum Erzielen einer höheren Messgeschwindigkeit und/oder einer niedrigeren Messgenauigkeit verändert wird, wenn das Fehlerfreiheitskriterium erfüllt ist.

Anders ausgedrückt kann also der Aufwand der Vermessung des als unkritisch bewerteten Referenzelementes verringert werden und kann insbesondere die Messgeschwindigkeit erhöht werden, was mit einer in der Regel weniger genauen Vermessung einhergeht. Hierdurch kann die für eine Durchführung des Prüfplans erforderliche Zeitdauer verringert werden. Die geringere Messgenauigkeit kann in Anbetracht der Bewertung als unkritisches Referenzelement und des erreichbaren Zeitgewinns akzeptabel sein.

Das Anpassen des Vermessungsparameters kann automatisch (d. h. benutzerautonom) erfolgen, zum Beispiel basierend auf vorab hinterlegten Regeln und/oder einem Anpassungsalgorithmus. Der Bediener kann also davon entlastet werden, die geeignete Anpassung selbst zu bestimmen. Stattdessen kann diese automatisch im Prüfplan hinterlegt und/oder dem Bediener zur finalen Freigabe vorgeschlagen werden. Zusammenhänge zwischen Vermessungsparametern und der Messgeschwindigkeit sind hinlänglich bekannt und können zum Beispiel in dem vorstehend genannten Algorithmus hinterlegt werden. Es kann aber auch vorgesehen sein, dass der Bediener eine entsprechende Anpassung durch manuelle Eingabe selbst vornimmt.

Ebenso kann vorgesehen sein, dass ein Vermessungsparameter, auf dessen Basis ein Vermessungsergebnis des als kritisch bewerteten Referenzelements ermittelbar ist, zum Erzielen einer höheren Messgenauigkeit verändert wird, wenn das Fehlerkriterium erfüllt ist. Auch dies kann wiederum automatisch oder benutzergesteuert erfolgen. Zusammenhänge zwischen Einstellungen von Vermessungsparameter und damit erzielbaren Messgenauigkeiten sind hinlänglich bekannt. Zum Beispiel erfordert eine höhere Messgenauigkeit typischerweise geringere Messgeschwindigkeiten. Die sich damit erhöhende Zeitdauer zum Ausführen des Prüfplans kann aber akzeptabel sein, wenn die Prüfmerkmalsquantifizierung dadurch verbessert wird.

Die Erfindung betrifft ferner eine Computereinrichtung zum Validieren eines Prüfplans für die Objektvermessung mit einem Koordinatenmessgerät,
wobei der Prüfplan wenigstens ein Prüfmerkmal enthält, das im Rahmen der Objektvermessung quantifiziert werden soll, wobei die Quantifizierung des Prüfmerkmals auf Basis eines Vermessungsergebnisses von wenigstens einem Referenzelement des Objekts erfolgen soll;
wobei die Computereinrichtung dazu eingerichtet ist, folgende Maßnahmen durchzuführen:
   - Erhalten (und/oder Ermitteln) von wenigstens einer Genauigkeitsgröße des Vermessungsergebnisses des Referenzelements;
   - Ermitteln eines Fehlereinflusses des Referenzelements auf die Quantifizierung des Prüfmerkmals basierend auf der Genauigkeitsgröße.

Die Computereinrichtung kann wenigstens eine Prozessoreinrichtung umfassen (zum Beispiel einen Mikroprozessor), um Programmanweisungen abzuarbeiten. Die Programmanweisungen können auf einer (digitalen) Speichereinrichtung der Computereinrichtung hinterlegt sein. Durch Abarbeiten und/oder Ausführen der Programmanweisungen, können sämtliche hierin geschilderten Maßnahmen umgesetzt werden.

Zum Erhalten der Genauigkeitsgröße kann die Computereinrichtung dazu eingerichtet sein, jegliche hierin erwähnte Variante zum Ermitteln dieser Genauigkeitsgröße auszuführen oder aber eine auf anderem Wege ermittelte Genauigkeitsgröße zum Beispiel aus einer Speichereinrichtung und/oder einer Datenbank auszulesen.

Zum Ermitteln des Fehlereinflusses kann die Computereinrichtung dazu eingerichtet sein, jegliche hierin geschilderten Ermittlung- und insbesondere Berechnungsmaßnahmen auszuführen.

Um die vorstehenden, aber auch jegliche anderweitige Maßnahme auszuführen, kann die Computereinrichtung geeignete Programmanweisungen, Algorithmen und/oder Softwarekomponenten umfassen, die beispielsweise mittels einer Prozessoreinrichtung der Computereinrichtung ausführbar sind.

Die Computereinrichtung kann jegliche Weiterbildung und jegliches weitere Merkmal umfassen, um sämtliche der vorstehenden oder nachstehenden Schritte, Betriebszustände und Funktionen bereitzustellen oder auszuführen. Insbesondere kann die Anordnung dazu eingerichtet sein, ein Verfahren gemäß jeglichem der vorstehenden oder nachstehenden Aspekte auszuführen. Sämtliche vorstehenden Ausführungen zu und Weiterbildungen von Verfahrensmerkmalen können bei den gleichlautenden Merkmalen der Computereinrichtung ebenfalls vorgesehen sein bzw. auf diese zutreffen.

Im Folgenden wird eine Ausführungsform der Erfindung anhand der beigefügten schematischen Figuren erläutert. In ihrer Art und/oder Funktion übereinstimmende Merkmale können dabei figurenübergreifend mit den gleichen Bezugszeichen versehen sein.
- Fig. 1: zeigt ein Beispiel eines Koordinatenmessgeräts mit einer Computereinrichtung gemäß einem Ausführungsbeispiel der Erfindung, wobei die Computereinrichtung ein erfindungsgemäßes Verfahren ausführt.
- Fig. 2: zeigt einen schematisch dargestellten Prüfplan samt Abhängigkeiten zwischen Prüfmerkmal und Referenzelement zum Erläutern des erfindungsgemäßen Verfahrens;
- Figur 3: zeigt ein allgemeines Ablaufschema eines erfindungsgemäßen Verfahrens;
- Fig. 4A-C: zeigen eine Möglichkeit zum Bestimmen eines Fehlereinflusses gemäß einer Variante des erfindungsgemäßen Verfahrens; und
- Fig. 5A-B: zeigt ein weiteres Beispiel eines Fehlereinflusses gemäß einer weiteren Variante des erfindungsgemäßen Verfahrens.

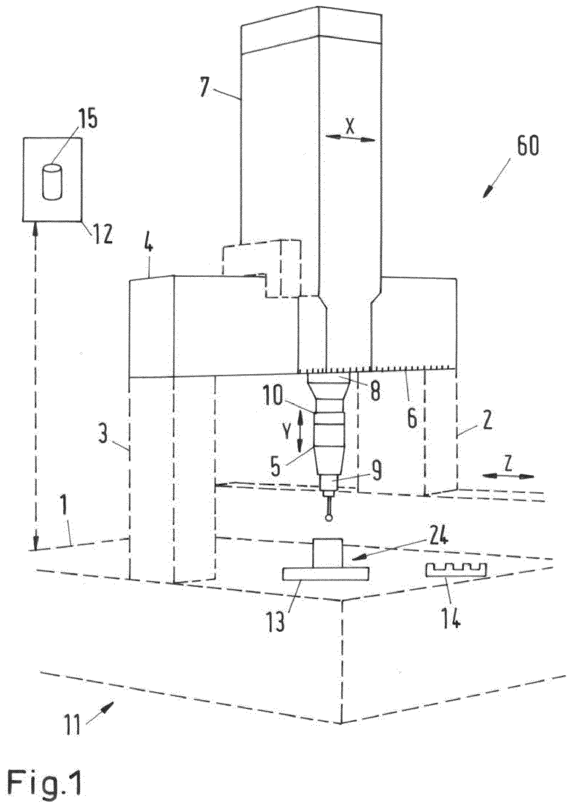

In Figur 1 ist ein Koordinatenmessgerät (KMG) 60 gezeigt, dass lediglich beispielhaft als ein taktiles KMG 60 in Portalbauweise ausgebildet ist. Ebenso könnte ein optisches KMG verwendet werden oder ein anderer Aufbau bzw. eine andere kinematische Struktur. Ferner alternativ könnte ein KMG verwendet werden, dass nach Art eines Computertomographen mit invasiver elektromagnetischer Strahlung Werkstücke durchleuchtet. Das KMG 60 dient allgemein dazu, einen Prüfplan für ein Messobjekt 24 abzuarbeiten bzw. das Objekt 24 nach Maßgabe dieses Prüfplans zu vermessen.

In an sich prinzipiell bekannter Weise ist das KMG 60 in Portalbauweise ausgebildet und umfasst einen Messtisch 1, über dem Säulen 2, 3 verfahrbar sind, die zusammen mit einem Querträger 4 ein Portal des KMG 60 bilden. Der Querträger 4 ist an seinen gegenüberliegenden Enden mit den Säulen 2 bzw. 3 verbunden, die auf dem Messtisch 1 längsverschieblich gelagert sind.

Der Querträger 4 ist mit einem Querschlitten 7 kombiniert, welcher luftgelagert entlang dem Querträger 4 (in X-Richtung) beweglich ist. Die momentane Position des Querschlittens 7 relativ zu dem Querträger 4 kann anhand einer Maßstabsteilung 6 festgestellt werden. An dem Querschlitten 7 ist eine in vertikaler Richtung bewegliche Pinole 8 gelagert, die an ihrem unteren Ende über eine Montageeinrichtung 10 mit einem Messsensor 5 verbunden ist. An dem Messsensor 5 ist ein taktil abtastender Tastkopf 9 abnehmbar angeordnet. Anstelle des Tastkopfs 9 könnte der Messsensor 5 ebenso einen berührungslos abtastenden Sensor umfassen, insbesondere einen Lasersensor.

Auf dem Messtisch 1 ist ein zusätzlicher drehbarer Messtisch 13 angeordnet, auf dem ein nach Maßgabe eines Prüfplans zu vermessendes Messobjekt 24 angeordnet ist, welches durch Drehung des Messtisches 13 um eine vertikale Drehachse gedreht werden kann. Ferner ist auf dem Messtisch 1 ein Magazin 14 angeordnet, in dem verschiedene Tastköpfe angeordnet werden können, die gegen den Tastkopf 9 ausgetauscht werden können, oder in dem verschiedene Taststifte angeordnet werden können, die gegen den von dem Tastkopf 9 getragenen Taststift ausgetauscht werden können.

Ferner zeigt Fig. 1 schematisch eine Computereinrichtung 12 gemäß einem Ausführungsbeispiel der Erfindung, wobei die Computereinrichtung 12 als eine Steuereinrichtung des KMG 60 ausgebildet ist. Die Computereinrichtung 12 verfügt über eine nicht gesondert dargestellte Prozessoreinrichtung, über Software bzw. Programmanweisungen und zumindest einen Datenspeicher 15. Die Computereinrichtung 12 ist über Signal- und Steuerleitungen mit ansteuerbaren Komponenten des KMG 60 verbunden, insbesondere mit Antrieben. Außerdem ist die Computereinrichtung 12 über eine Messdatenverbindung mit denjenigen Elementen des KMG 60 verbunden, die zur Ermittlung von auf Basis des Prüfplans gewonnenen Messwerten eingesetzt werden. Da derartige Elemente und Einrichtungen auf dem Gebiet von KMG 60 allgemein bekannt sind, wird hier nicht näher darauf eingegangen.

Die Computereinrichtung 12 erhält und/oder erzeugt einen Prüfplan für ein gemäß diesem Prüfplan zu vermessendes Objekt 24. Im gezeigten Fall validiert die Computereinrichtung 12 auch den Prüfplan mittels eines erfindungsgemäßen Verfahrens. Es ist ebenso möglich, dass die Computereinrichtung 12 separat von dem KMG 60 bereitgestellt ist, z.B. als ein herkömmlicher PC in einem Büro. Das KMG 60 würde dann über eine gewöhnliche Steuereinrichtung verfügen, die den mit der separaten Computereinrichtung 12 validierten Prüfplan ausführt.

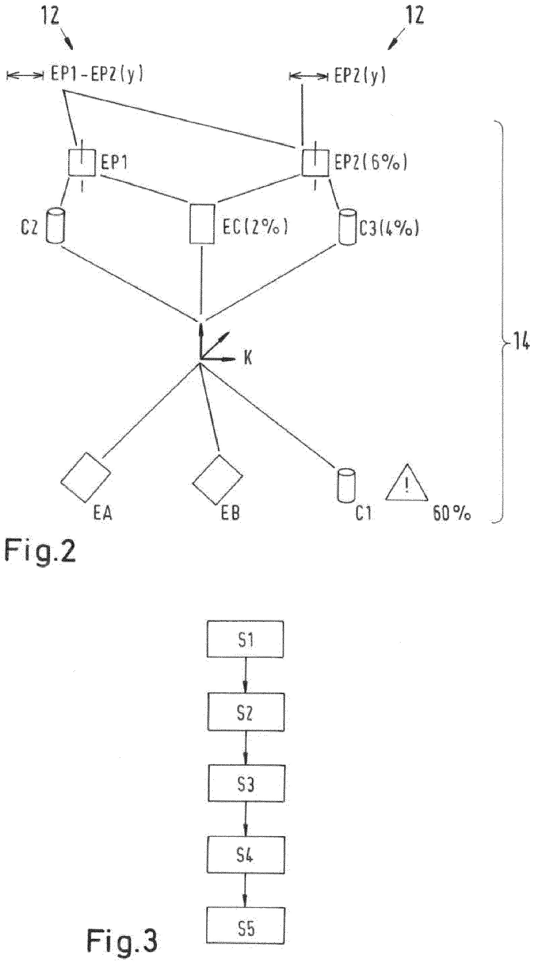

In Fig. 2 sind Prüfmerkmale 12 und Referenzelemente (Messelemente) 14 eines Prüfplans gezeigt. Die Darstellung kann auch als Abhängigkeitsbaum bezeichnet und in dieser Form auf einer in Fig. 1 nicht dargestellten Anzeigeeinrichtung der Computereinrichtung 12 angezeigt werden.

Die Prüfmerkmale 12 und Referenzelemente 14 sind jeweils mit Symbolen versehen und mit identifizierenden Bezugszeichen, die ebenfalls angezeigt werden können. Weiter sind Prozentangabe bei einigen der Referenzelemente 14 gezeigt, die wiederum einem Bediener angezeigt werden können und die in nachstehend erläuterter Weise einen von einem Referenzelement beanspruchten Anteil an einer Toleranzbreite eines Prüfmerkmals angeben.

Sämtliche Messelemente aus Fig. 2 werden als Referenzelemente bezeichnet, da wenigstens eines der Prüfmerkmale 12 und genauer gesagt dessen Quantifizierung zumindest mittelbar von einem jedem der Referenzelementen 14 abhängig ist.

Gezeigt als Referenzelemente 14 sind Ebenen EA, EB, EC, Zylinder C1, C2 und Ebenenschnittpunkte EP1, EP2. Ferner gezeigt ist auch ein Referenzkoordinatensystem K, das kein geometrisches Merkmal bzw. Messelement des zu vermessenden Objekts ist.

Die Abhängigkeiten aus Figur 2 werden im Folgenden von unten nach oben erläutert. Zunächst wird die räumliche Lage (d. h. Position und Orientierung) von zwei in einem Winkel zueinanderstehenden Ebenen EA, EB des Objekts ermittelt. Diese Lage bildet das für diese Referenzelemente 14 ermittelte Vermessungsergebnis.

Hierfür werden jeweils eine Mehrzahl von Messpunkten an der Objektoberfläche im Bereich dieser Ebenen EA, EB erfasst und werden somit für jede der Ebenen EA, EB die räumlichen Koordinaten bestimmt. Ferner wird ein Zylinder C1 (d. h. ein zylindrischer Bereich des Objekts) erfasst, wofür ebenfalls eine Mehrzahl von Oberflächenpunkten des Zylinders C1 angetastet werden. Der Zylinder C1 ist derart relativ zu den Ebenen EA, EB orientiert, dass daraus die Ausrichtung eines Referenzkoordinatensystems K ermittelt werden kann. Möglichkeiten zum Erzeugen von entsprechenden Referenzkoordinatensystemen K durch Antasten ausgewählter Messelemente sind dem Fachmann geläufig und werden daher vorliegend nicht näher erläutert. Das Referenzkoordinatensystem K dient als Referenz zur Quantifizierung der Prüfmerkmale 12, zum Beispiel wenn Abstände in vorbestimmten Richtungen bzw. entlang vorbestimmter Achsen ermittelt werden sollen.

Nach Ermitteln der Ausrichtung des Referenzkoordinatensystems K werden dann weitere Referenzelemente 14 in Form zweier Zylinder C2, C3 und einer Ebene EC angetastet bzw. vermessen. Erneut werden wiederum die räumlichen Lagen diese Referenzelemente 14 als jeweilige Vermessungsergebnisse bestimmt.

Darauf basierend werden als rein rechnerisch bestimmtes Messelemente bzw. Referenzelement 14 sowie als ein weiteres Vermessungsergebnis die räumlichen Koordinaten der Schnittpunkte EP1, EP2 der Ebene EC mit den Zylindern C2, C3 bestimmt. Dies erfolgt mittels bekannter geometrischer Berechnungen anhand der ermittelten Lagen und der Koordinaten der Ebene EC und der Zylindern C2, C3.

Als Prüfmerkmale 12 werden dann zwei Abstände geprüft und quantifiziert. Lediglich beispielhaft handelt es sich hierbei um einen Abstand EP1-EP2 zwischen den beiden Schnittpunkten EP1, EP2 sowie einen Abstand von einem der Schnittpunkte EP2 zu einem Ursprung des Referenzkoordinatensystems K. Die Bezeichnung (Y) in Figur 2 gibt an, dass die Abstände entlang der Y-Achse des Referenzkoordinatensystems K (d. h. in Y-Richtung) ermittelt werden sollen.

Mittels der Linien in Figur 2 sind Abhängigkeiten zwischen den Referenzelementen 14 und insbesondere auch der Prüfmerkmale 12 markiert. Man erkennt, dass das Prüfmerkmal 12 betreffend den Abstand von einem der Schnittpunkte EP2 zu einem Ursprung des Referenzkoordinatensystems K direkt und unmittelbar von der ermittelten Lage (also dem rechnerisch ermittelten Vermessungsergebnis) des Schnittpunktpunkts EP12 abhängt. Dieser ist wiederum von den Zylinder C2, C3 und der Ebene EC abhängig bzw. wird durch diese definiert. Somit ist das entsprechende Prüfmerkmal 12 bzw. dessen Quantifizierung zumindest mittelbar auch von dem Zylinder C2, C3 und der Ebene EC abhängig.

Da mit dem entsprechenden Prüfmerkmal 12 der Abstand in Bezug auf das Referenzkoordinatensystems K ermittelt werden soll, liegt auch eine zumindest mittelbare Abhängigkeit von den anfangs vermessenen Ebenen EA, EB und dem Zylinder C1 vor.

In gleicher Weise ist auch das weitere Prüfmerkmal 12 betreffend den Abstand zwischen den einzelnen Ebenenschnittpunkten EP1, EP2 von sämtlichen weiteren Referenzelementen 14 abhängig.

Die Vermessungsergebnisse (d. h. die ermittelten Koordinatenwerte und/oder räumlichen Lagen) der Referenzelemente 14 beeinflussen somit die Werte, die für die Prüfmerkmale 12 schlussendlich ermittelt werden.

Die Erfindung sieht vor, diese (Fehler-) Einflüsse zu ermitteln und bevorzugt einem Bediener auch direkt anzuzeigen. Dabei werden die Einflüsse quantifiziert und werden Referenzelemente 14 als kritisch klassifiziert, wenn vorbestimmte Fehlerkriterien erfüllt sind.

In dem gezeigten Beispiel sind für ausgewählte Referenzelemente 14 und insbesondere gerichtet auf dasjenige Prüfmerkmal 12, dass die Abstandsmessungen zum Koordinatenursprung betreffen, Prozentangaben eingetragen, welche die Fehlereinflüsse der Referenzelemente 14 auf die Quantifizierung des entsprechenden Prüfmerkmals 12 angeben. Hierbei handelt es sich um die bereits erwähnten Anteile einer ausgenutzten Toleranzbreite des Prüfmerkmals 12.

Für den Zylinder C1, der die Prozentangabe 60 % aufweist, ist zudem visuell hervorgehoben, dass es sich um ein kritisches Referenzelement 14 handelt. Dies ist daher der Fall, da als Fehlerkriterium das Überschreiten eines maximal zulässigen Anteils der Toleranzbreite von (lediglich beispielhaft) 20 % definiert ist.

Der Bediener kann somit erkennen, welches Referenzelement 14 den größten und insbesondere einen kritischen Fehlereinfluss auf die Quantifizierung eines zu überprüfenden Prüfmerkmals 12 besitzt. Die Vermessung kritischer Referenzelemente 14 kann dann gezielt angepasst werden, um die erzielbare Genauigkeit zu verbessern, beispielsweise durch Herabsetzen einer Messgeschwindigkeit oder durch Erhöhen einer Anzahl von Antastpunkten. Hierzu können automatisch geeignete Anpassungen von entsprechenden Vermessungsparametern ermittelt und dem Bediener vorgeschlagen werden. Optional können diese Anpassungen auch automatisch umgesetzt bzw. implementiert werden. Als eine Anpassung könnte auch in Betracht gezogen werden, andere Referenzelemente 14 zu wählen bzw. kritische Referenzelemente 14 durch andere zu vermessende Referenzelemente 14 auszutauschen.

In Figur 3 ist das vorstehend geschilderte Vorgehen anhand eines Ablaufschemas gezeigt, das einen erfindungsgemäßen Ablauf eines Verfahrens allgemein darstellt.

In einem Schritt S1 werden Daten zu dem zu vermessenden Objekt erhalten, zum Beispiel als ein CAD-Datensatz.

In einem Schritt S2 werden zu überprüfende Prüfmerkmale 12 zum Beispiel von einem Bediener festgelegt. In an sich bekannter Weise kann dann (bevorzugt zumindest teilweise automatisch und/oder durch weitere Benutzereingaben) festgelegt werden, welche Referenzelemente 14 zum Ermitteln der Prüfmerkmale 12 zu vermessen sind. Hierdurch werden auch die Abhängigkeiten zwischen den Referenzelementen 14 und den Prüfmerkmalen 12 festgelegt bzw. können daraus ermittelt werden.

In einem Schritt S3 werden für die Referenzelemente 14 Genauigkeitsgrößen erhalten. Beispielsweise können diese Genauigkeitsgrößen aus einer Datenbank ausgelesen werden oder von einer anderen Computereinrichtung erhalten werden. Für zumindest einige der Referenzelemente 14 können auch individuelle Genauigkeitsgrößen ermittelt werden, zum Beispiel wenn diese in der vorstehend erläuterten Weise anhand von Einpassungs-bzw. Ausgleichsberechnungen bestimmt werden.

Es kann aber vorgesehen sein, dass zum Beispiel dann, wenn es sich bei der Genauigkeitsgröße um eine inhärente Messunsicherheit des KMG 60 handelt, zumindest für einige der Referenzelemente 14 dieselbe Genauigkeitsgröße betrachtet wird.

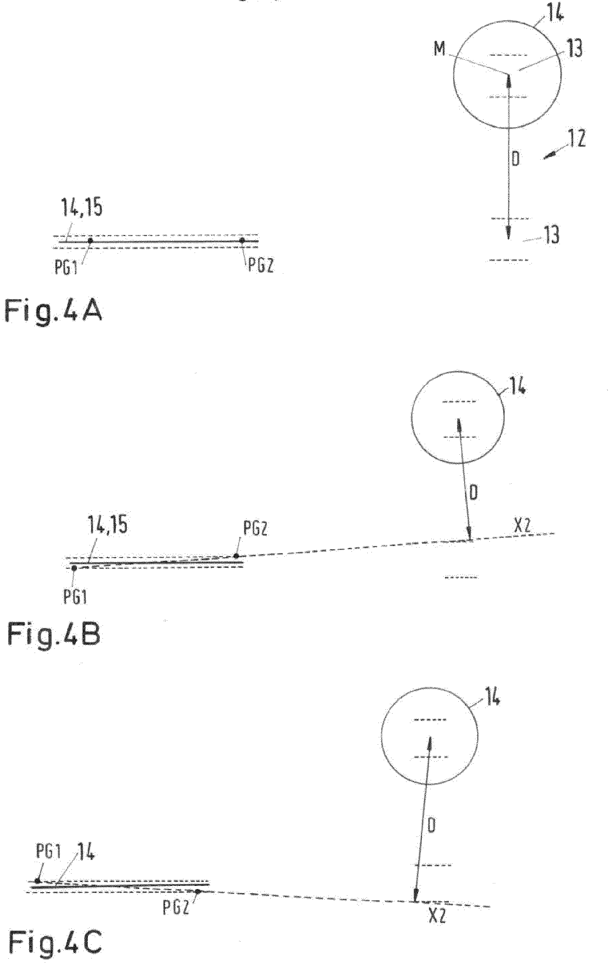

In einem Schritt S4 werden für jedes Prüfmerkmal 12 die Fehlereinflüsse derjenigen Referenzelemente 14 ermittelt, von denen dieses Prüfmerkmal 12 zumindest mittelbar abhängig ist. Dies kann zum Beispiel in der nachstehend am Beispiel der Figuren 4A-4C erläuterten Weise und unter Rückgriff auf die Genauigkeitsgröße erfolgen.

In einem Schritt S5 wird dann anhand der Fehlereinflüsse ermittelt, ob Referenzelemente 14 als kritisch einzustufen sind. Ist dies der Fall, kann dies einem Bediener in Figur 2 angezeigt werden und es können gegebenenfalls Anpassungen angeregt werden oder automatisch umgesetzt werden.

In den Figuren 4A-4C ist ein Beispiel zum Ermitteln des Fehlereinflusses von einem Referenzelement 14 auf ein Prüfmerkmal 12 gezeigt. Als Prüfmerkmal 12 wird dabei ein Abstand D zwischen einem Kreismittelpunkt M eines kreisförmigen Referenzelements 14 und einer Geraden 15 in dem gezeigten Beispiel vertikaler Richtung ermittelt. Lediglich beispielhaft wird dabei allein der Fehlereinfluss der Geraden 15 betrachtet. Ein Fehlereinfluss des kreisförmigen Referenzelement 14 ist aber in analoger Weise ermittelbar.

Für die Gerade 15 wird als Genauigkeitsgröße eine inhärente Messunsicherheit des verwendeten Koordinatenmessgeräts 60 betrachtet. Diese Messunsicherheit ist als Toleranzbereich um die Gerade 15 aufgetragen. Hierdurch soll zum Ausdruck gebracht werden, dass als Vermessungsergebnis eine Lage der Geraden 15 auch an jeglicher Position innerhalb dieses Toleranzbereichs erhalten werden kann. Der Toleranzbereich stellt somit ein mögliches Wertespektrum des Vermessungsergebnisses der Geraden 15 dar. In an sich bekannter Weise wird dieses Vermessungsergebnisses durch Erfassen der Koordinaten von zwei Punkten PG1, PG2 der Gerade 15 ermittelt.

Auch für den Abstand D und den Mittelpunkt M des kreisförmigen Referenzelements 14 sind Toleranzbereich 13 eingetragen. Der Toleranzbereich 13 des Mittelpunkts M wird ebenfalls aus einer dazugehörigen Genauigkeitsgröße ermittelt, wird in der folgenden verkürzten Darstellung aber nicht weiter betrachtet. Der Toleranzbereich 13 des Abstands D (der untere Toleranzbereich 13 in Figur 4A) wird in der nachstehend erläuterten Weise ermittelt und bildet (zumindest anteilig) ein mögliches Wertespektrum der Quantifizierung des Prüfmerkmals "Abstand". Dieses Wertespektrum kann auch durch den oberen Toleranzbereich 13 des Mittelpunkts M beeinflusst werden, was aber vereinfachend nicht näher betrachtet wird.

Um den Toleranzbereich 13 des Abstands D zu ermitteln, werden Extremsituationen betrachtet, die zu größtmöglichen Wertevariationen dieses Abstands D führen können. Genauer gesagt werden Extremwerte oder Extremverläufe der Geraden 15 gemäß einer Obergrenze und Untergrenze des möglichen Wertespektrums dieses Referenzelements 14 bzw. dessen als Vermessungsergebnis ermittelter Lage betrachtet. Der Begriff "extrem" bezieht sich dabei auf die Auswirkungen auf die Quantifizierung des betrachteten Prüfmerkmals, nämlich dass dieses entweder einen maximalen oder minimalen Wert annimmt.

In Figur 4B ist eine Extremsituation bzw. eine erste Grenze der vermessenen Lage der Geraden 15 dargestellt, die zu einem größtmöglich verringernden Einfluss auf den Abstand D führt. Dieser liegt bei einem strichliert angedeuteten Streckenverlauf der Geraden 15 vor. Ein solcher Verlauf kann sich zum Beispiel dann einstellen, wenn die gemessenen Koordinaten des ersten Punktes PG1 der Geraden 15 von der maximalen Messunsicherheit in einer ersten (zum Beispiel negativen) Weise bzw. mit einem solchen Vorzeichen beeinflusst werden und die gemessenen Koordinaten des zweiten Punkts PG2 in umgekehrter Weise von der Messunsicherheit beeinflusst werden.

In Figur 4C ist der umgekehrte Fall gezeigt, wobei die Punkte PG1, PG2 jeweils in umgekehrter Weise beeinflusst werden (zum Beispiel PG1 maximal positiv und PG2 maximal negativ). Hierdurch wird eine größtmögliche Abstand D erhalten, also der größtmögliche (oder maximierende) Fehlereinfluss der vermessenen Lage der Geraden 15 auf den als Prüfmerkmal 12 ermittelten Abstand D.

Zusammengefasst wird also auf Basis einer Genauigkeitsgröße betreffend die Genauigkeit, mit der eine Lage der Geraden 15 als Vermessungsergebnisses ermittelbar ist, der Fehlereinfluss dieses Referenzelements 14 auf die Quantifizierung des Prüfmerkmals ermittelt. Dieser Fehlereinfluss kann zum Beispiel als die Bandbreite des Wertespektrums oder des Toleranzbereichs 13 des Abstands D definiert sein und/oder darauf basierend quantifiziert werden. Der Fehlereinfluss kann dann mit einem Fehlerkriterium verglichen werden, wobei das Fehlerkriterium zum Beispiel ein maximal zulässiges Ausmaß des entsprechenden Wertespektrums bzw. Toleranzbereichs 13 angeben kann. Auf diese Weise ist bestimmbar, ob der Fehlereinfluss der Geraden 15 und insbesondere deren Vermessung bzw. das mögliche Vermessungs-Wertespektrum als kritisch einzustufen ist oder nicht.

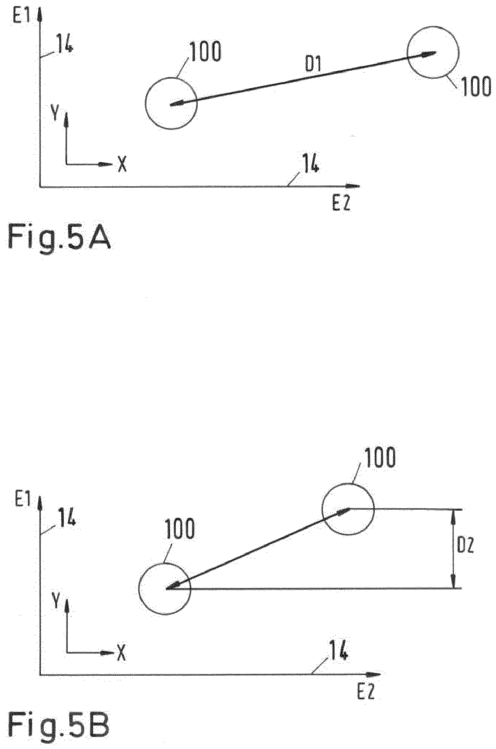

In den Figuren 5A-B ist ein weiteres Beispiel für die Fehlereinflussermittlung gezeigt, und zwar für eine Abstandsermittlung zwischen zwei Kreisen 100. Dabei wird ein Koordinatensystem durch zwei Ebenen E1, E2 festgelegt, die jeweils Referenzelemente 14 bilden. In an sich bekannter Weise kann die Lage von Ebenen z.B. durch Antasten dreier Punkte in dieser Ebene ermittelt werden.

Die Ebenen E1, E2 stehen senkrecht auf der Blattebene und im Idealfall senkrecht aufeinander. Sie definieren die Ausrichtung eines X-Y-Koordinatensystems, dessen Achsen idealerweise senkrecht aufeinander stehen. Die X-Y-Achsen verlaufen dabei parallel zu einer jeweiligen Ebene E1, E2.

In Fig. 5A wird als Prüfmerkmal 12 ein direkter Abstand D1 zwischen den Kreisen 100 ermittelt. Die Referenzelemente 14 haben hierauf keinen Einfluss.

In Fig. 5B wird ein Prüfmerkmal 12 der Abstand D2 in Y berechnet. Die Ebene E1 hat hierauf einen signifikanten Einfluss, da sie die Orientierung der Y-Ausrichtung bzw. Y-Koordinatenachse maßgeblich festlegt. Es kann analog wie zum vorigen Beispiel dann ermittelt werden, wie sich eine erwartbare, da toleranzbehaftete Variation des Ebene E1 auf ein erwartetes Wertspektrum dieses Abstand D2 auswirkt.

## Patentansprüche

1. Computerimplementiertes Verfahren zum Validieren eines Prüfplans für eine Objektvermessung mit einem Koordinatenmessgerät (60) zur Vorbereitung einer erst anschließend durchgeführten Umsetzung oder Ausführung des Prüfplans, wobei der Prüfplan wenigstens ein im Rahmen der Objektvermessung zu quantifizierendes Prüfmerkmal (12) enthält, wobei die Quantifizierung des Prüfmerkmals auf Basis eines Vermessungsergebnisses von wenigstens einem Referenzelement (14) des Objekts erfolgen soll;
wobei das Verfahren umfasst:
- Erhalten von wenigstens einer Genauigkeitsgröße, die eine Genauigkeit des Vermessungsergebnisses des Referenzelements (14) angibt;
- Ermitteln eines Fehlereinflusses des Referenzelements (14) auf die Quantifizierung des Prüfmerkmals (12) basierend auf der Genauigkeitsgröße,
- Ermitteln, ob der Fehlereinfluss ein Fehlerfreiheitskriterium erfüllt, und wenn dies der Fall ist:
- Klassifizieren des Referenzelements (14) als ein unkritisches Referenzelement (14), wobei wenigstes ein Vermessungsparameter, auf dessen Basis ein Vermessungsergebnis des als unkritisch bewerteten Referenzelements (14) ermittelbar ist, zum Erzielen einer höheren Messgeschwindigkeit verändert wird, wenn das Fehlerfreiheitskriterium erfüllt ist.

2. Computerimplementiertes Verfahren zum Validieren eines Prüfplans für eine Objektvermessung mit einem Koordinatenmessgerät (60) zur Vorbereitung einer erst anschließend durchgeführten Umsetzung oder Ausführung des Prüfplans, wobei der Prüfplan wenigstens ein im Rahmen der Objektvermessung zu quantifizierendes Prüfmerkmal (12) enthält, wobei die Quantifizierung des Prüfmerkmals auf Basis eines Vermessungsergebnisses von wenigstens einem Referenzelement (14) des Objekts erfolgen soll;
wobei das Verfahren umfasst:
- Erhalten von wenigstens einer Genauigkeitsgröße, die eine Genauigkeit des Vermessungsergebnisses des Referenzelements (14) angibt;
- Ermitteln eines Fehlereinflusses des Referenzelements (14) auf die Quantifizierung des Prüfmerkmals (12) basierend auf der Genauigkeitsgröße,
- Ermitteln, ob der Fehlereinfluss ein Fehlerkriterium erfüllt, und wenn dies der Fall ist:
- Klassifizieren des Referenzelements (14) als ein kritisches Referenzelement (14), wobei wenigstes ein Vermessungsparameter, auf dessen Basis ein Vermessungsergebnis des als kritisch bewerteten Referenzelements (14) ermittelbar ist, zum Erzielen einer höheren Messgenauigkeit verändert wird.

3. Computerimplementiertes Verfahren zum Validieren eines Prüfplans für eine Objektvermessung mit einem Koordinatenmessgerät (60) zur Vorbereitung einer erst anschließend durchgeführten Umsetzung oder Ausführung des Prüfplans, wobei der Prüfplan wenigstens ein im Rahmen der Objektvermessung zu quantifizierendes Prüfmerkmal (12) enthält, wobei die Quantifizierung des Prüfmerkmals auf Basis eines Vermessungsergebnisses von wenigstens einem Referenzelement (14) des Objekts erfolgen soll;
wobei das Verfahren umfasst:
- Erhalten von wenigstens einer Genauigkeitsgröße, die eine Genauigkeit des Vermessungsergebnisses des Referenzelements (14) angibt;
- Ermitteln eines Fehlereinflusses des Referenzelements (14) auf die Quantifizierung des Prüfmerkmals (12) basierend auf der Genauigkeitsgröße,
- Ermitteln, ob der Fehlereinfluss ein Fehlerkriterium erfüllt, und wenn dies der Fall ist:
Klassifizieren des Referenzelements (14) als kritisches Referenzelement (14), wobei Gegenmaßnahmen ermittelt und/oder vorgeschlagen und/oder umgesetzt werden, die ein Anpassen der Vermessung des wenigstens einen Referenzelements (14), sodass die Messgenauigkeit erhöht wird, oder eine Neudefinition des Prüfmerkmals (12) und/oder eine Neuauswahl des wenigstens einen vermessenen Referenzelements (14) umfassen, wenn das Fehlerkriterium erfüllt ist.

4. Verfahren nach einem der vorangegangenen Ansprüche,
wobei das Vermessungsergebnis des Referenzelements (14) basierend auf dem Vermessungsergebnis von wenigstens einem weiteren Referenzelement (14) zu ermitteln ist und auch für dieses weitere Referenzelement ein Fehlereinfluss auf die erreichbare Genauigkeit der Quantifizierung ermittelt wird.

5. Verfahren nach einem der vorangehenden Ansprüche,
wobei das Referenzelement (14) ein geometrisches Element des Objekts ist.

6. Verfahren nach einem der vorangehenden Ansprüche,
wobei das Vermessungsergebnis des Referenzelements (14) anhand von wenigstens einem Koordinatenwert dieses Referenzelements (14) ermittelt wird; und insbesondere wobei der Koordinatenwert auf Basis einer realen oder simulierten Objektvermessung ermittelt wird.

7. Verfahren nach einem der vorangehenden Ansprüche,
wobei das Vermessungsergebnis des Referenzelements (14) wenigstens einen räumlichen Freiheitsgrad und/oder wenigstens eine Abmessung des Referenzelements (14) angibt.

8. Verfahren nach einem der vorangehenden Ansprüche,
wobei die Genauigkeitsgröße auf Basis von wenigstens einem der folgenden ermittelt wird:
- einer statistischen Kenngröße einer Verteilung von Koordinatenwerten, die zum Ermitteln des Vermessungsergebnisses des Referenzelements (14) bestimmt wurden;
- einer Abweichung wenigstens eines Koordinatenwerts von einem aus einer Mehrzahl von Koordinatenwerten berechneten Vermessungsergebnis für das Referenzelement (14);
- einem Ausgleichsverfahren, das zum Berechnen des Vermessungsergebnisses aus einer Mehrzahl von Koordinatenwerten durchgeführt wird;
- einer Formabweichung des Referenzelements (14);
- einer inhärenten Messunsicherheit des Koordinatenmessgeräts (60).

9. Verfahren nach einem der vorangehenden Ansprüche,
wobei der Fehlereinfluss des Referenzelements (14) auf Basis eines möglichen Wertespektrums des Vermessungsergebnisses dieses Referenzelements (14) bestimmt wird, wobei das Wertespektrum anhand der Genauigkeitsgröße bestimmt wird.

10. Verfahren nach Anspruch 9,
wobei auf Basis des Wertespektrums des Referenzelements (14) ein mögliches Quantifizierungs-Wertespektrum des Prüfmerkmals (12) ermittelt und mit einer zulässigen Toleranzbreite des Prüfmerkmals (12) verglichen wird.

11. Verfahren nach den Ansprüchen 2 und 10 oder 3 und 10,
wobei dann, wenn das Quantifizierungs-Wertespektrum einen zulässigen Anteil der Toleranzbreite des Prüfmerkmals (12) überschreitet, das Fehlerkriterium erfüllt ist.

12. Verfahren nach Anspruch 3 oder einem auf diesen zurückbezogenen Anspruch, wobei Gegenmaßnahmen automatisch ermittelt und/oder vorgeschlagen und/oder umgesetzt werden.

13. Computereinrichtung (12) zum Validieren eines Prüfplans für eine Objektvermessung mit einem Koordinatenmessgerät (60) zur Vorbereitung einer erst anschließend durchgeführten Umsetzung oder Ausführung des Prüfplans,
wobei der Prüfplan wenigstens ein im Rahmen der Objektvermessung zu quantifizierendes Prüfmerkmal (12) enthält, wobei die Quantifizierung des Prüfmerkmals (12) auf Basis eines Vermessungsergebnisses von wenigstens einem Referenzelement (14) des Objekts erfolgt;
wobei die Computereinrichtung (12) dazu eingerichtet ist, folgende Maßnahmen durchzuführen:
- Erhalten von wenigstens einer Genauigkeitsgröße des Vermessungsergebnisses des Referenzelements (14);
- Ermitteln eines Fehlereinflusses des Referenzelements (14) auf die Quantifizierung des Prüfmerkmals (12) basierend auf der Genauigkeitsgröße,
- Ermitteln, ob der Fehlereinfluss ein Fehlerfreiheitskriterium erfüllt, und wenn dies der Fall ist:
- Klassifizieren des Referenzelements (14) als ein unkritisches Referenzelement (14), wobei wenigstes ein Vermessungsparameter, auf dessen Basis ein Vermessungsergebnis des als unkritisch bewerteten Referenzelements (14) ermittelbar ist, zum Erzielen einer höheren Messgeschwindigkeit verändert wird, wenn das Fehlerfreiheitskriterium erfüllt ist.

14. Computereinrichtung (12) zum Validieren eines Prüfplans für eine Objektvermessung mit einem Koordinatenmessgerät (60) zur Vorbereitung einer erst anschließend durchgeführten Umsetzung oder Ausführung des Prüfplans,
wobei der Prüfplan wenigstens ein im Rahmen der Objektvermessung zu quantifizierendes Prüfmerkmal (12) enthält, wobei die Quantifizierung des Prüfmerkmals (12) auf Basis eines Vermessungsergebnisses von wenigstens einem Referenzelement (14) des Objekts erfolgt; wobei die Computereinrichtung (12) dazu eingerichtet ist, folgende Maßnahmen durchzuführen:
- Erhalten von wenigstens einer Genauigkeitsgröße des Vermessungsergebnisses des Referenzelements (14);
- Ermitteln eines Fehlereinflusses des Referenzelements (14) auf die Quantifizierung des Prüfmerkmals (12) basierend auf der Genauigkeitsgröße,
- Ermitteln, ob der Fehlereinfluss ein Fehlerkriterium erfüllt, und wenn dies der Fall ist: Klassifizieren des Referenzelements (14) als ein kritisches Referenzelement (14), wobei wenigstes ein Vermessungsparameter, auf dessen Basis ein Vermessungsergebnis des als kritisch bewerteten Referenzelements (14) ermittelbar ist, zum Erzielen einer höheren Messgenauigkeit verändert wird.

15. Computereinrichtung (12) zum Validieren eines Prüfplans für eine Objektvermessung mit einem Koordinatenmessgerät (60) zur Vorbereitung einer erst anschließend durchgeführten Umsetzung oder Ausführung des Prüfplans,
wobei der Prüfplan wenigstens ein im Rahmen der Objektvermessung zu quantifizierendes Prüfmerkmal (12) enthält, wobei die Quantifizierung des Prüfmerkmals (12) auf Basis eines Vermessungsergebnisses von wenigstens einem Referenzelement (14) des Objekts erfolgt;
wobei die Computereinrichtung (12) dazu eingerichtet ist, folgende Maßnahmen durchzuführen:
- Erhalten von wenigstens einer Genauigkeitsgröße des Vermessungsergebnisses des Referenzelements (14);
- Ermitteln eines Fehlereinflusses des Referenzelements (14) auf die Quantifizierung des Prüfmerkmals (12) basierend auf der Genauigkeitsgröße,
- Ermitteln, ob der Fehlereinfluss ein Fehlerkriterium erfüllt, und wenn dies der Fall ist: Klassifizieren des Referenzelements (14) als kritisches Referenzelement (14), wobei Gegenmaßnahmen ermittelt und/oder vorgeschlagen und/oder umgesetzt werden, die ein Anpassen der Vermessung des wenigstens einen Referenzelements (14), sodass die Messgenauigkeit erhöht wird, oder eine Neudefinition des Prüfmerkmals (12) und/oder eine Neuauswahl des wenigstens einen vermessenen Referenzelements (14) umfassen, wenn das Fehlerkriterium erfüllt ist.

## Claims

1. Computer-implemented method for validating a test plan for an object measurement using a coordinate measuring machine (60) for preparing an implementation or execution of the test plan that is only carried out thereafter, wherein the test plan contains at least one test feature (12) to be quantified within the scope of the object measurement, wherein the quantification of the test feature is intended to be implemented on the basis of a measurement result of at least one reference element (14) of the object;
wherein the method comprises:
- obtaining at least one accuracy variable which specifies an accuracy of the measurement result of the reference element (14);
- ascertaining an error effect of the reference element (14) on the quantification of the test feature (12) on the basis of the accuracy variable;
- ascertaining whether the error effect meets an error-free criterion, and should this be the case:
- classifying the reference element (14) as a noncritical reference element (14), wherein at least one measurement parameter on the basis of which a measurement result of the reference element (14) assessed as noncritical is ascertainable is altered for the purposes of obtaining a faster measurement speed if the error-free criterion is satisfied.

2. Computer-implemented method for validating a test plan for an object measurement using a coordinate measuring machine (60) for preparing an implementation or execution of the test plan that is only carried out thereafter, wherein the test plan contains at least one test feature (12) to be quantified within the scope of the object measurement, wherein the quantification of the test feature is intended to be implemented on the basis of a measurement result of at least one reference element (14) of the object;
wherein the method comprises:
- obtaining at least one accuracy variable which specifies an accuracy of the measurement result of the reference element (14);
- ascertaining an error effect of the reference element (14) on the quantification of the test feature (12) on the basis of the accuracy variable;
- ascertaining whether the error effect meets an error criterion, and should this be the case:
- classifying the reference element (14) as a critical reference element (14), wherein at least one measurement parameter on the basis of which a measurement result of the reference element (14) assessed as critical is ascertainable is altered for the purposes of obtaining a faster measurement speed.

3. Computer-implemented method for validating a test plan for an object measurement using a coordinate measuring machine (60) for preparing an implementation or execution of the test plan that is only carried out thereafter, wherein the test plan contains at least one test feature (12) to be quantified within the scope of the object measurement, wherein the quantification of the test feature is intended to be implemented on the basis of a measurement result of at least one reference element (14) of the object;
wherein the method comprises:
- obtaining at least one accuracy variable which specifies an accuracy of the measurement result of the reference element (14);
- ascertaining an error effect of the reference element (14) on the quantification of the test feature (12) on the basis of the accuracy variable;
- ascertaining whether the error effect meets an error criterion, and should this be the case:
- classifying the reference element (14) as a critical reference element (14), wherein countermeasures which comprise an adaptation of the measurement of the at least one reference element (14), so that the measurement accuracy is increased, or a new definition of the test feature (12) and/or a new selection of the at least one measured reference element (14) are ascertained and/or proposed and/or implemented if the error criterion is satisfied.

4. Method according to any one of the preceding claims, wherein the measurement result of the reference element (14) should be ascertained on the basis of the measurement result of at least one further reference element (14) and an error effect on the achievable accuracy of the quantification is also ascertained for this further reference element.

5. Method according to any one of the preceding claims, wherein the reference element (14) is a geometric element of the object.

6. Method according to any one of the preceding claims, wherein the measurement result of the reference element (14) is ascertained on the basis of at least one coordinate value of said reference element (14); and in particular wherein the coordinate value is ascertained on the basis of a real or simulated object measurement.

7. Method according to any one of the preceding claims, wherein the measurement result of the reference element (14) specifies at least one spatial degree of freedom and/or at least one dimension of the reference element (14) .

8. Method according to any one of the preceding claims, wherein the accuracy variable is ascertained on the basis of at least one of the following:
- a statistical characteristic of a distribution of coordinate values which were determined to ascertain the measurement result of the reference element (14) ;
- a deviation of at least one coordinate value from a measurement result, which was calculated from a multiplicity of coordinate values, for the reference element (14);
- an adjustment method which is carried out to calculate the measurement result from a multiplicity of coordinate values;
- a shape deviation of the reference element (14);
- an inherent measurement uncertainty of the coordinate measuring machine (60).

9. Method according to any one of the preceding claims, wherein the error effect of the reference element (14) is determined on the basis of a possible value spectrum of the measurement result of said reference element (14), the value spectrum being determined on the basis of the accuracy variable.

10. Method according to Claim 9,
wherein, on the basis of the value spectrum of the reference element (14), a possible quantification value spectrum of the test feature (12) is ascertained and compared with an admissible tolerance range of the test feature (12).

11. Method according to either of Claims 2 and 10 or 3 and 10,
wherein the error criterion is satisfied if the quantification value spectrum exceeds an admissible portion of the tolerance range of the test feature (12).

12. Method according to Claim 3 or a claim referred back to it, wherein countermeasures are automatically ascertained and/or proposed and/or implemented.

13. Computer device (12) for validating a test plan for an object measurement using a coordinate measuring machine (60) for preparing an implementation or execution of the test plan that is only carried out thereafter, wherein the test plan contains at least one test feature (12) to be quantified within the scope of the object measurement, wherein the quantification of the test feature (12) is implemented on the basis of a measurement result of at least one reference element (14) of the object;
wherein the computer device (12) is configured to carry out the following measures:
- obtaining at least one accuracy variable of the measurement result of the reference element (14);
- ascertaining an error effect of the reference element (14) on the quantification of the test feature (12) on the basis of the accuracy variable;
- ascertaining whether the error effect meets an error-free criterion, and should this be the case:
- classifying the reference element (14) as a noncritical reference element (14), wherein at least one measurement parameter on the basis of which a measurement result of the reference element (14) assessed as noncritical is ascertainable is altered for the purposes of obtaining a faster measurement speed if the error-free criterion is satisfied.

14. Computer device (12) for validating a test plan for an object measurement using a coordinate measuring machine (60) for preparing an implementation or execution of the test plan that is only carried out thereafter, wherein the test plan contains at least one test feature (12) to be quantified within the scope of the object measurement, wherein the quantification of the test feature (12) is implemented on the basis of a measurement result of at least one reference element (14) of the object; wherein the computer device (12) is configured to carry out the following measures:
- obtaining at least one accuracy variable of the measurement result of the reference element (14);
- ascertaining an error effect of the reference element (14) on the quantification of the test feature (12) on the basis of the accuracy variable;
- ascertaining whether the error effect meets an error criterion, and should this be the case: classifying the reference element (14) as a critical reference element (14), wherein at least one measurement parameter on the basis of which a measurement result of the reference element (14) assessed as critical is ascertainable is altered for the purposes of obtaining a faster measurement speed.

15. Computer device (12) for validating a test plan for an object measurement using a coordinate measuring machine (60) for preparing an implementation or execution of the test plan that is only carried out thereafter, wherein the test plan contains at least one test feature (12) to be quantified within the scope of the object measurement, wherein the quantification of the test feature (12) is implemented on the basis of a measurement result of at least one reference element (14) of the object;
wherein the computer device (12) is configured to carry out the following measures:
- obtaining at least one accuracy variable of the measurement result of the reference element (14);
- ascertaining an error effect of the reference element (14) on the quantification of the test feature (12) on the basis of the accuracy variable;
- ascertaining whether the error effect meets an error criterion, and should this be the case: classifying the reference element (14) as a critical reference element (14), wherein countermeasures which comprise an adaptation of the measurement of the at least one reference element (14), so that the measurement accuracy is increased, or a new definition of the test feature (12) and/or a new selection of the at least one measured reference element (14) are ascertained and/or proposed and/or implemented if the error criterion is satisfied.

## Revendications

1. Procédé mis en œuvre par ordinateur permettant de valider un plan de contrôle pour un mesurage d'objet à l'aide d'un appareil de mesure de coordonnées (60) en vue de la préparation d'une mise en œuvre ou d'une exécution du plan de contrôle effectuée par la suite seulement, le plan de contrôle comportant au moins une caractéristique de contrôle (12) à quantifier dans le cadre du mesurage d'objet, la quantification de la caractéristique de contrôle devant être effectuée sur la base d'un résultat de mesurage d'au moins un élément de référence (14) de l'objet ;
le procédé comprenant les étapes consistant à :
- obtenir au moins une grandeur de précision indiquant une précision du résultat de mesurage de l'élément de référence (14) ;
- établir une influence d'erreur de l'élément de référence (14) sur la quantification de la caractéristique de contrôle (12) sur la base de la grandeur de précision,
- établir si l'influence d'erreur satisfait un critère d'absence d'erreur, et si c'est le cas :
- classifier l'élément de référence (14) comme un élément de référence non critique (14), dans lequel au moins un paramètre de mesurage, sur la base duquel un résultat de mesurage de l'élément de référence (14) évalué comme non critique peut être établi, est modifié pour obtenir une vitesse de mesure plus élevée si le critère d'absence d'erreur est satisfait.

2. Procédé mis en œuvre par ordinateur permettant de valider un plan de contrôle pour un mesurage d'objet à l'aide d'un appareil de mesure de coordonnées (60) en vue de la préparation d'une mise en œuvre ou d'une exécution du plan de contrôle effectuée par la suite seulement, le plan de contrôle comportant au moins une caractéristique de contrôle (12) à quantifier dans le cadre du mesurage d'objet, la quantification de la caractéristique de contrôle devant être effectuée sur la base d'un résultat de mesurage d'au moins un élément de référence (14) de l'objet ;
le procédé comprenant les étapes consistant à :
- obtenir au moins une grandeur de précision indiquant une précision du résultat de mesurage de l'élément de référence (14) ;
- établir une influence d'erreur de l'élément de référence (14) sur la quantification de la caractéristique de contrôle (12) sur la base de la grandeur de précision,
- établir si l'influence d'erreur satisfait un critère d'erreur, et si c'est le cas :
- classifier l'élément de référence (14) comme un élément de référence critique (14), dans lequel au moins un paramètre de mesurage, sur la base duquel un résultat de mesurage de l'élément de référence (14) évalué comme critique peut être établi, est modifié pour obtenir une précision de mesure plus élevée.

3. Procédé mis en œuvre par ordinateur permettant de valider un plan de contrôle pour un mesurage d'objet à l'aide d'un appareil de mesure de coordonnées (60) en vue de la préparation d'une mise en œuvre ou d'une exécution du plan de contrôle effectuée par la suite seulement, le plan de contrôle comportant au moins une caractéristique de contrôle (12) à quantifier dans le cadre du mesurage d'objet, la quantification de la caractéristique de contrôle devant être effectuée sur la base d'un résultat de mesurage d'au moins un élément de référence (14) de l'objet ;
le procédé comprenant les étapes consistant à :
- obtenir au moins une grandeur de précision indiquant une précision du résultat de mesurage de l'élément de référence (14) ;
- établir une influence d'erreur de l'élément de référence (14) sur la quantification de la caractéristique de contrôle (12) sur la base de la grandeur de précision,
- établir si l'influence d'erreur satisfait un critère d'erreur, et si c'est le cas :
- classifier l'élément de référence (14) comme élément de référence critique (14), dans lequel des contre-mesures sont établies et/ou proposées et/ou mises en oeuvre, lesquelles comprennent un ajustement du mesurage dudit au moins un élément de référence (14) de manière à ce que la précision de mesure soit augmentée, ou une redéfinition de la caractéristique de contrôle (12) et/ou une nouvelle sélection dudit au moins un élément de référence (14) mesuré, si le critère d'erreur est satisfait.

4. Procédé selon l'une quelconque des revendications précédentes,
dans lequel le résultat de mesurage de l'élément de référence (14) doit être établi sur la base du résultat de mesurage d'au moins un autre élément de référence (14), et pour cet autre élément de référence aussi, une influence d'erreur sur la précision possible de la quantification est établie.

5. Procédé selon l'une quelconque des revendications précédentes,
dans lequel l'élément de référence (14) est un élément géométrique de l'objet.

6. Procédé selon l'une quelconque des revendications précédentes,
dans lequel le résultat de mesurage de l'élément de référence (14) est établi à l'aide d'au moins une valeur de coordonnées de cet élément de référence (14) ; et dans lequel en particulier la valeur de coordonnées est établie sur la base d'un mesurage d'objet réel ou simulé.

7. Procédé selon l'une quelconque des revendications précédentes,
dans lequel le résultat de mesurage de l'élément de référence (14) indique au moins un degré de liberté spatial et/ou au moins une dimension de l'élément de référence (14).

8. Procédé selon l'une quelconque des revendications précédentes,
dans lequel la grandeur de précision est établie sur la base d'au moins l'un des éléments suivants :
- une grandeur caractéristique statistique d'une distribution de valeurs de coordonnées qui ont été déterminées pour établir le résultat de mesurage de l'élément de référence (14) ;
- un écart d'au moins une valeur de coordonnées par rapport à un résultat de mesurage calculé à partir d'une pluralité de valeurs de coordonnées pour l'élément de référence (14) ;
- un procédé de compensation qui est effectué pour calculer le résultat de mesurage à partir d'une pluralité de valeurs de coordonnées ;
- un écart de forme de l'élément de référence (14) ;
- une incertitude de mesure inhérente de l'appareil de mesure de coordonnées (60).

9. Procédé selon l'une quelconque des revendications précédentes,
dans lequel l'influence d'erreur de l'élément de référence (14) est déterminée sur la base d'un spectre de valeurs possibles du résultat de mesurage de cet élément de référence (14), le spectre de valeurs étant déterminé à l'aide de la grandeur de précision.

10. Procédé selon la revendication 9,
dans lequel, sur la base du spectre de valeurs de l'élément de référence (14), un spectre de valeurs de quantification possibles de la caractéristique de contrôle (12) est établi et comparé avec une largeur de tolérance admissible de la caractéristique de contrôle (12) .

11. Procédé selon les revendications 2 et 10 ou 3 et 10, dans lequel le critère d'erreur est satisfait si le spectre de valeurs de quantification dépasse une part admissible de la largeur de tolérance de la caractéristique de contrôle (12).

12. Procédé selon la revendication 3 ou une revendication se rapportant à celle-ci, dans lequel des contre-mesures sont établies et/ou proposées et/ou mises en œuvre automatiquement.

13. Dispositif informatique (12) permettant de valider un plan de contrôle pour un mesurage d'objet à l'aide d'un appareil de mesure de coordonnées (60) en vue de la préparation d'une mise en œuvre ou d'une exécution du plan de contrôle effectuée par la suite seulement,
le plan de contrôle comportant au moins une caractéristique de contrôle (12) à quantifier dans le cadre du mesurage d'objet, la quantification de la caractéristique de contrôle (12) étant effectuée sur la base d'un résultat de mesurage d'au moins un élément de référence (14) de l'objet ;
le dispositif informatique (12) étant conçu pour effectuer les mesures suivantes :
- obtenir au moins une grandeur de précision du résultat de mesurage de l'élément de référence (14) ;
- établir une influence d'erreur de l'élément de référence (14) sur la quantification de la caractéristique de contrôle (12) sur la base de la grandeur de précision,
- établir si l'influence d'erreur satisfait un critère d'absence d'erreur, et si c'est le cas :
- classifier l'élément de référence (14) comme un élément de référence non critique (14), dans lequel au moins un paramètre de mesurage, sur la base duquel un résultat de mesurage de l'élément de référence (14) évalué comme non critique peut être établi, est modifié pour obtenir une vitesse de mesure plus élevée si le critère d'absence d'erreur est satisfait.

14. Dispositif informatique (12) permettant de valider un plan de contrôle pour un mesurage d'objet à l'aide d'un appareil de mesure de coordonnées (60) en vue de la préparation d'une mise en œuvre ou d'une exécution du plan de contrôle effectuée par la suite seulement,
le plan de contrôle comportant au moins une caractéristique de contrôle (12) à quantifier dans le cadre du mesurage d'objet, la quantification de la caractéristique de contrôle (12) étant effectuée sur la base d'un résultat de mesurage d'au moins un élément de référence (14) de l'objet ; le dispositif informatique (12) étant conçu pour effectuer les mesures suivantes :
- obtenir au moins une grandeur de précision du résultat de mesurage de l'élément de référence (14) ;
- établir une influence d'erreur de l'élément de référence (14) sur la quantification de la caractéristique de contrôle (12) sur la base de la grandeur de précision,
- établir si l'influence d'erreur satisfait un critère d'erreur, et si c'est le cas : classifier l'élément de référence (14) comme un élément de référence critique (14), dans lequel au moins un paramètre de mesurage, sur la base duquel un résultat de mesurage de l'élément de référence (14) évalué comme critique peut être établi, est modifié pour obtenir une précision de mesure plus élevée.

15. Dispositif informatique (12) permettant de valider un plan de contrôle pour un mesurage d'objet à l'aide d'un appareil de mesure de coordonnées (60) en vue de la préparation d'une mise en œuvre ou d'une exécution du plan de contrôle effectuée par la suite seulement,
le plan de contrôle comportant au moins une caractéristique de contrôle (12) à quantifier dans le cadre du mesurage d'objet, la quantification de la caractéristique de contrôle (12) étant effectuée sur la base d'un résultat de mesurage d'au moins un élément de référence (14) de l'objet ;
le dispositif informatique (12) étant conçu pour effectuer les mesures suivantes :
- obtenir au moins une grandeur de précision du résultat de mesurage de l'élément de référence (14) ;
- établir une influence d'erreur de l'élément de référence (14) sur la quantification de la caractéristique de contrôle (12) sur la base de la grandeur de précision,
- établir si l'influence d'erreur satisfait un critère d'erreur, et si c'est le cas : classifier l'élément de référence (14) comme élément de référence critique (14), dans lequel des contre-mesures sont établies et/ou proposées et/ou mises en oeuvre, lesquelles comprennent un ajustement du mesurage dudit au moins un élément de référence (14), de manière à ce que la précision de mesure soit augmentée, ou une redéfinition de la caractéristique de contrôle (12) et/ou une nouvelle sélection dudit au moins un élément de référence (14) mesuré, si le critère d'erreur est satisfait.
